# EUROPÄISCHE PATENTSCHRIFT

(11) **EP 2 515 023 B1**
(45) Veröffentlichungstag und Bekanntmachung des Hinweises auf die Patenterteilung: **10.09.2014**
(21) Anmeldenummer: 12154206.2
(22) Anmeldetag: 07.02.2012
(51) Int. Cl.: F16M 1/00, F16B 7/04

(54) **Rahmenbausatz und Rahmen**
Frame kit and frame
Pièces d'assemblage de cadre et cadre

(30) Priorität: 20.04.2011 DE 102011007789
(43) Veröffentlichungstag der Anmeldung: 24.10.2012
(73) Patentinhaber: Krones AG, 93073 Neutraubling (DE)
(72) Erfinder: Runge, Torsten, 94315 Straubing (DE)
(74) Vertreter: Grünecker, Kinkeldey, Stockmair & Schwanhäusser

(56) Entgegenhaltungen:
- WO-A1-2005/054535
- DE-A1- 10 159 506
- DE-A1- 19 630 225
- FR-A1- 2 386 715
- US-A- 5 913 477

## Beschreibung

Die Erfindung betrifft einen Bausatz gemäß Oberbegriff des Patentanspruches 1.

Im allgemeinen Maschinenbau und vor allem Anlagenbau, speziell im Behälterbehandlungsanlagenbau, werden Maschinenkomponenten und Anlagenkomponenten bereits im Werk teilweise auf Rahmen vormontiert, da sie in der Anlage bestimmte räumliche Positionen haben müssen. Hierfür ist es bekannt, jeweils einen für eine Anlagenausführung benötigten Rahmen komplett vorzukonstruieren und zu fertigen, mit dem Nachteil, dass bei veränderten räumlichen Positionen von Anlagenkomponenten in einer anderen Anlagenausführung jeweils ein neuer Rahmen vorkonstruiert und gebaut werden muss. Allenfalls bei Standardanlagenauslegungen können vorkonstruierte und mehrfach gebaute Rahmen universell verwendet werden. Jede Sonderausführung erfordert jedoch einen maßgeschneiderten Rahmen. Ein Nachteil dieses Konzeptes ist nicht nur der hohe bauliche und konstruktive Voraufwand, sondern auch die Tatsache, dass manche der Rahmen eine unzweckmäßig große Bodenfläche oder unzweckmäßig großen Bauraum beanspruchen, der in der späteren Anlage unzweckmäßig und eigentlich überflüssig ist.

Aus DE 101 59 506 ist ein Gerüst-Bauprinzip bekannt, gemäß welchem nicht nur rahmenförmige Gerüstteile über angeformte Steckmuffen-Systemteile miteinander verbunden werden, sondern auch jeweils zwei Rahmenholme direkt verbunden werden. Die Steckverbindungen zwischen den angeformten Steckmuffen-Systemteilen werden durch einen quer durchgesteckten Sicherungsstift gesichert. Das Steckverbindungsprinzip wird nur für Längs-Rahmenholme eingesetzt, hingegen nicht für Quersprossen der leiterartigen Gerüstteile. Als Längsholme dient ein einziger gerader Segmenttyp einer festgelegten Länge.

Bei einem aus WO 2005/054535 A1 bekannten Rahmenbauprinzip erlauben Rahmensegmente definierende Standardsegmente keine direkten Verbindungen miteinander, sondern es werden jeweils mindestens zwei Standardsegmente an ihren Enden über ein speziell ausgebildetes Verbindungsglied tragfähig miteinander verbunden. Die Standardsegmente sind Metall-Matrix-Verbundstangen oder -rohre. Das Kopplungsprinzip der Standardsegmente erfordert eine Vielzahl unterschiedlich ausgebildeter Verbindungsglieder.

Aus US 5 913 477 ist ein modular aufgebauter Rahmen zum Ausbilden einer Pflanzenhalte-Einrichtung nach Art eines Rankgitters bekannt, wobei Standardsegmente in gerader oder abgebogener Form jeweils an den Enden Zapfen und Zapfenaufnahmen zum Ineinanderstecken besitzen. Ferner sind Adapter vorgesehen, mit denen sich Standardsegmente unterschiedlicher Profile bzw. Profilweiten koppeln lassen. Die Standardsegmente bestehen aus Metall oder Kunststoff. In den Rahmen werden Wandplatten eingesetzt. Jeder Rahmen dient ferner der Bewässerung von Pflanzen. Mehrere Rahmen können modulartig miteinander verbunden werden.

Aus DE 196 30 225 A ist ein Rohrsystem zum Erstellen einer Gerüstkonstruktion bekannt. Es werden nur gerade Rohre verwendet, an deren beiden Enden ineinanderpassende Steckmuffen-Systemteile vorgeformt sein können. Ein Rohrende ist aufgeweitet (Steckmuffen-Aufnahme), ein anderes zusammengepresst (Steckmuffen-Zapfen).

Aus FR 2 386 715 A sind vorgefertigte Rahmenbaukomponenten bekannt, die H- oder eine Bügelform haben. Steckmuffen-Systemteile sind separat vorgefertigt und in die Rohrenden eingebaut.

Der Erfindung liegt die Aufgabe zugrunde, einen Bausatz der eingangs genannten Art anzugeben, mit dem jeweiligen Anlagen-Vormontageanforderungen entsprechende Rahmen flexibel erstellbar sind, und zwar auch Modularrahmen für Sonderausführungen von Anlagen, bei denen die Rahmen nur den jeweils gerade tatsächlich benötigten Bauraum oder die gerade benötigte Bodenfläche okkupieren.

Die gestellte Aufgabe wird mit den Merkmalen des Patentanspruches 1 gelöst.

Durch den mitwachsend erstellbaren Rahmen lassen sich standardisiert vorkonstruierte und vorgefertigte Standard-Segmente zum Rahmenbau nach Maß verwenden, ohne einen Rahmen komplett separat vorzukonstruieren und zu bauen. Da der jeweilige Rahmen entsprechend der jeweiligen Vormontage-Anforderung individuell mitwächst, wird auch nur der tatsächlich benötigte Bauraum oder die tatsächlich benötigte Bodenfläche okkupiert, so dass der Rahmen immer zu der jeweiligen Anlagenausführung abgepasst ist. Ein wesentlicher Vorteil dieses Konzeptes liegt darin, dass bei Sonderausführungen von Anlagen keine Vorkonstruktion und Vorfertigung maßgeschneiderter Rahmen erforderlich sind, sondern auf die Standard-Segmente zurückgegriffen werden kann bzw. der dann zu erstellende Rahmen aus den Standard-Segmenten erst im Zuge der Vormontage passend bzw. nach Bedarf erstellt wird. Die Standard-Segmente sind mit den daran vorgesehenen Steckmuffen-Systemteilen in ausreichender Anzahl und Kompatibilität und Tragfähigkeit vorgefertigt, und werden als mitwachsender Rahmen in die jeweilige Baugruppen-Konstruktion oder Anlagen-Komponentengruppierung integriert. Dabei werden gegebenenfalls mehrere gleiche Standard-Segmente für jede Anlage verwendet die auch für Sonderausführungen brauchbar sind. Jede Baugruppe hat schließlich einen mitgewachsenen Rahmen und kann auch über ihren Rahmen mit einem Rahmen einer zugehörigen Baugruppe direkt oder indirekt, indirekt z.B. über standardisierte Verbindungssegmente, modular verbunden werden. Erst während des Ablaufes der Vormontage werden die vorgefertigten Standard-Segmente verschweißt, verlötet oder verschraubt, um die notwendige Stabilität und Tragfähigkeit des Rahmens sicherzustellen. Im Bausatz ist wenigstens ein Standard-Segmenttyp ein gerader Rund- oder Mehrkant-Profilabschnitt mit einem vorspringenden Muffensteck-Systemteil an einem Ende und einem vertieften Muffensteck-Systemteil im anderen Ende. Die Muffensteck-Systemteile können rund oder mehrkantig ausgebildet sein und passen jeweils paarweise zueinander. Wenigstens ein weiterer Standard-Segmenttyp ist ein gerader Rund- oder Mehrkant-Profilabschnitt mit einem vorspringenden Muffensteck-Systemteil an einem Ende und einem vertieften Muffensteck-Systemteil im anderen Ende, und wenigstens einem seitlichen abstehenden Vormontieransatz und einem im Wesentlichen zur Achse des geraden Hohl- oder Vollprofilabschnittes senkrecht auf den Vormontieransatz ausgerichteten Vormontierwiderlager, wobei zwischen Vormontieransatz und Vormontierwiderlager ein hohler Durchgang definiert ist. Dieser Segmenttyp passt modular zu anderen und lässt Anlagen-Komponenten stabil fixieren. Ein weiterer Standard-Segmenttyp ist ein 90°-Hohl- oder Vollprofilabschnitt mit abgewinkeltem oder gerundetem Verlauf und einem vorspringenden Steckmuffen-Systemteil an einem Ende und einem vertieften Steckmuffen-Systemteil am anderen Ende. Dieser Segmenttyp dient z.B. Verbindungs- und/oder Raumbildungs-Aufgaben, und kann auch Anlage-Komponenten tragen. Bei der Vorfertigung der Standard-Segmenttypen können zur Verbindung bereits Verschraubbohrungen und/oder Schweißnaht-Fasen vorgefertigt sein, um die Erstellung des jeweiligen Rahmens zu vereinfachen.

Ferner kann der Bausatz zweckmäßig wenigstens einen weiteren Standard-Segmenttyp zur indirekten Verbindung anderer gleicher oder ungleicher Standard-Segmenttypen umfassen, der ein Standard-Verbindungssegment mit entsprechenden vorspringenden und vertieften Muffensteck-Systemteilen ist. Hierbei können an dem Segmenttyp mehrere Paare solcher vorspringenden und vertieften Muffensteck-Systemteile vorgesehen sein, gegebenenfalls orthogonal in zwei oder sogar drei einander kreuzenden Richtungen, um einen zwei- oder dreidimensionalen Kupplungsmodul zu schaffen.

Innerhalb des Bausatzes können Standard-Segmenttypen aus Hohl- oder Vollprofil mit unterschiedlichen Durchmessern (Rundprofile oder Rohre) oder Weiten (Mehrkantprofile oder Profilrohre) vorgefertigt sein.

Um in dem mitwachsenden Rahmen oder bei der modularen Verbindung jeweils zweier Rahmen die jeweilige Verbindung auch dann herstellen zu können, wenn unterschiedlich dimensionierte Standard-Segmenttypenden zueinander stoßen, kann zweckmäßig zumindest das jeweilige Standard-Verbindungssegment in Anpassung an unterschiedliche zu verbindende Durchmesser oder Weiten adapterartig ausgebildet sein.

Ferner kann eine zumindest außenseitige Oberflächenbehandlung der verschiedenen Standard-Segmenttypen zweckmäßig sein. Eine Beschichtung, Lackierung oder auf andere Maßnahme gewährleistet eine vorbestimmte Korrosionsfestigkeit und/oder wünschenswerte hygienische Anforderungen sowohl bei der Lagerung als auch beim späteren Betrieb der Anlage.

Der jeweilige, zur Vormontage von Anlagekomponenten einzeln oder in Gruppen mitwachsend erstellte Rahmen wird nicht vorkonstruiert und vorgefertigt, sondern erst im Ablauf der Vormontage mitwachsend entsprechend der jeweiligen Anlage-Vormontageanforderung erstellt, wobei universell zueinander passende Standard-Segmenttypen eines Bausatzes verwendet werden. Somit sind daraus auch Rahmen von Sonderausführungen von Anlagen problemlos erstellbar. In einer Anlage kann jede Komponente oder Komponentengruppe an einem eigenen mitwachsenden Rahmen vormontiert werden. Dieser Rahmen kann dann modular an jedem anderen Rahmen einer anderen Anlagen-Komponentengruppe oder Anlagen-Komponente befestigt werden, so dass nicht nur jeder Rahmen mitwachsend erstellbar ist, sondern die gesamte Rahmenstruktur einer Anlage modular in den Anforderungen entsprechenden Schritten aufgebaut wird, was in höherer Flexibilität im Falle von Sonderausführungen von Anlagen und einer besseren Raumausnutzung resultiert.

Anhand der Zeichnungen werden Ausführungsformen des Efindungsgegenstandes erläutert. Es zeigen:
- Fig. 1: verschiedene Standard-Segmenttypen eines Bausatzes zum Erstellen von Rahmen,
- Fig.2: einen Teil eines bei einer Vormontage wenigstens einer Anlagen-Komponente mitwachsend erstellten Rahmens,
- Fig. 3: eine andere Ausführungsform des Rahmens und wenigstens einer Anlagen-Komponente bei der Vormontage, und
- Fig. 4: eine weitere Ausführungsform eines mitwachsenden Rahmens bei der Vormontage einer Anlagen-Komponente.

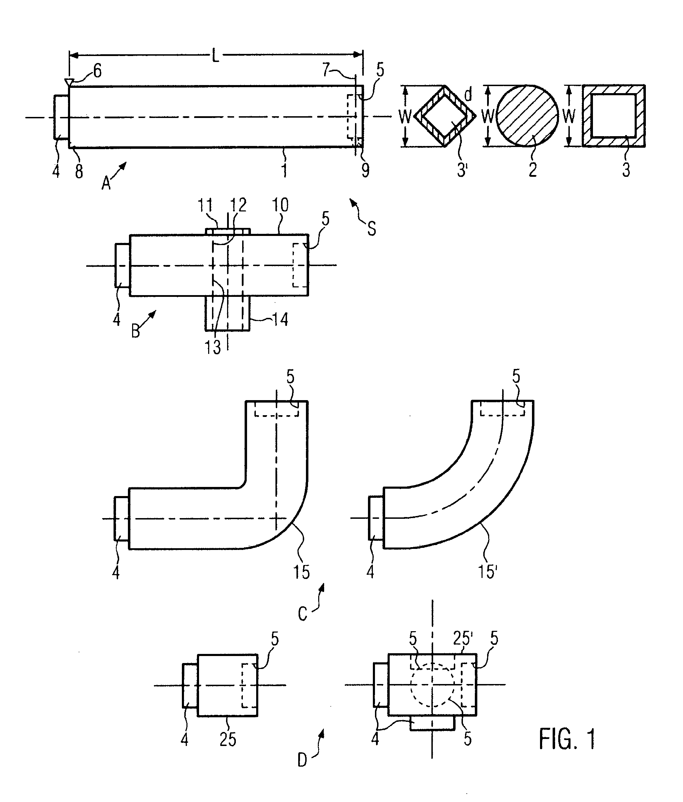

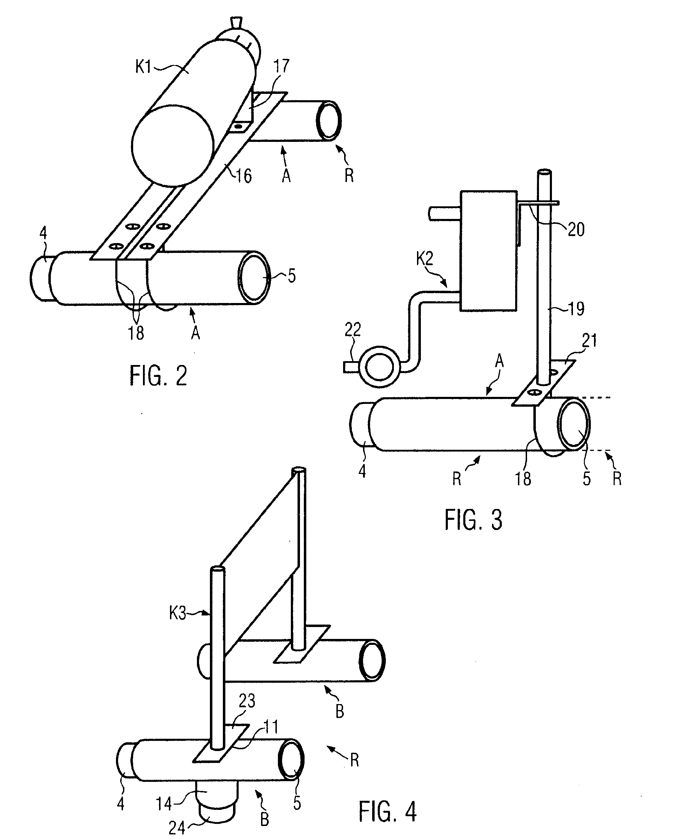

In Fig. 1 sind mehrere bevorzugte Standard-Segmenttypen A, B, C und D eines Bausatzes S zum Erstellen eines mitwachsenden Rahmens R (Fig. 2 bis 4) bei der Vormontage von Anlagen oder Anlagen-Komponenten K1, K2, K3, insbesondere Behälterbehandlungsanlagen-Komponenten, gezeigt. Die Standard-Segmenttypen A bis D sind vorgefertigt und werden zum Erstellen eines jeweiligen Rahmens R entsprechend der Anlagen-Vormontageanforderung bausteinartig nach dem jeweiligen Bedarf miteinander zu einem tragfähigen Rahmen R kombiniert und verbunden.

Ein erster Standard-Segmenttyp A ist ein gerader Hohl- oder Vollprofilabschnitt 1 einer vorbestimmten Länge L (Durchmesser d beispielsweise bei einem vollen Rundprofil 2 aus Stahl oder Leichtmetall, Weite w z.B. bei einem hohlen Mehrkantprofil 3, 3'). Natürlich kann das Rundprofil 2 hohl sein (ein Rohr) bzw. das Mehrkantprofil 3, 3' ein Vollprofil sein, z.B. ein Vierkant- oder Sechskantprofil. Das Mehrkantprofil 3' kann im Rahmen R wie in Fig. 1 um die Profilachse gedreht, z.B. um 45°, verbaut//ausgerichtet sein. Dies wäre aus hygienischen Aspekten günstig, da Flüssigkeiten besser ablaufen.

An dem Standard-Segmenttyp A ist an einem Ende ein vorspringender Muffensteck-Systemteil 4 vorgesehen, beispielsweise ein weitgehend kreiszylindrischer oder mehrkantiger oder anders profilierter Vorsprung mit einem kleineren Außendurchmesser oder einer kleineren Außenweite als die des Voll- oder Hohlprofilabschnittes 1. Im gegenüberliegenden Ende ist ein vertiefter Muffensteck-Systemteil 5 vorgeformt, der entweder eine entsprechend profilierte oder runde Vertiefung ist, oder vom Innendurchmesser oder dem Innenquerschnitt eines Hohlprofils selbst gebildet wird. Die Muffensteck-Systemteile 4, 5 sind z.B. koaxial und passen zueinander. Mehrkant-Muffensteck-Systemteile 4, 5 können z.B. bei Mehrkantprofilen 3, 3' (Fig. 1) eine bestimmte um die Längsachse gedrehte Position des jeweiligen Standard-Segmenttyps A, B, C, D beim Erstellen des Rahmens R bestimmen (z.B. wegen hygienischer Aspekte).

Bei der Erstellung eines mitwachsenden Rahmens R (Fig. 2 bis 4) erfolgt die Verbindung von Standard-Segmenttypen A unter Nutzen der Muffensteck-Systemteile 4, 5 und zusätzlich durch Verschrauben, Verlöten oder Verschweißen. Eine Verschweißung ist bei 6 angedeutet, eine Verschraubung hingegen bei 7. Dazu kann der jeweilige Standard-Segmenttyp A (bis D) schon mit wenigstens einer Schweißnaht-Fase 8 und/oder Schraubbohrungen 9 vorgefertigt sein.

Ein weiterer Standard-Segmenttyp B ist ein gerader Rund- oder Vollprofilabschnitt 10, gegebenenfalls einer anderen Länge als der Standard-Segmenttyp A, jedoch ebenfalls mit vorspringenden und vertieften Muffensteck-Systemteilen 4, 5. Zusätzlich weist der Standard-Segmenttyp B wenigstens einen seitlichen Vormontieransatz 14 auf, der sich im Wesentlichen senkrecht zur Achse des Voll- oder Hohlprofilabschnittes 10 erstreckt, und auf den diametral als Widerlager 12 die Mündung eines hohlen Kanals 13, oder sogar ein körperliches Vormontier-Widerlager 11 wie eine Platte, ein Sockel, eine Vertiefung oder dgl. ausgerichtet ist, sozusagen als integrierte Vormontage-Abstützung.

Bei nicht gezeigten alternativen Ausführungsformen des Standard-Segmenttyps B können mehrere Ansätze 14 und Widerlager 12, 11 in Längsrichtung verteilt und/oder in unterschiedlichen Richtungen orientiert vorgesehen sein. Der Standard-Segmenttyp B kann innerhalb des Bausatzes S z.B. zum Standard-Segmenttyp A (und C, D) passen.

Ein weiterer Standard-Segmenttyp C des Bausatzes S ist entweder ein 90°-Voll- oder Hohlprofilabschnitt 15, 15' mit abgewinkeltem Verlauf oder gerundetem Verlauf und den angeformten vorspringenden und vertieften Muffensteck-Systemteilen 4, 5.

Ein weiterer Standard-Segmenttyp D könnte als Standard-Verbindungssegment zum Bausatz S gehören. Die kann ein gerader Hohl- oder Vollprofilabschnitt 25 relativ kurzer Länge mit den vorspringenden und vertieften Muffensteck-Systemteilen 4, 5 sein, die koaxial aufeinander ausgerichtet sind, oder mit mehreren Paaren vorspringender und vertiefter Muffensteck-Systemteile 4, 5. Diese Paare können in mehreren zueinander unterschiedlich orientierten Achsen vorgesehen sein, gegebenenfalls in drei orthogonal zueinander orientierten Achsen, die einander schneiden oder zueinander versetzt sein können.

Das Material der in ausreichender Anzahl in den Bausatz S vorgefertigten Standard-Segmenttypen A bis D ist zweckmäßig ein Metall, wie Stahl oder ein Leichtmetall oder eine Leichtmetalllegierung, gegebenenfalls mit einer inneren und/oder äußeren Oberflächenbehandlung.

In Fig. 2 ist bei der Vormontage einer Anlagen-Komponente K1 die Anlagen-Komponente K1 mit einem Fußteil 17 auf einer Quertraverse 16 befestigt, die mit beispielsweise Spannschellen 18 auf Standard-Segmenttypen A des bei der Vormontage mitwachsenden Rahmens R befestigt ist.

In Fig. 3 ist eine andere Anlagen-Komponente K2 einerseits über eine Konsole 20 an einer Stütze 19 gehaltert, die mit einem Auflager 21 und einer Spannschelle 18 stehend vormontiert wird, während an der anderen Seite eine Abstützung 22 seitlich an dem Standard-Segmenttyp A des Rahmens R fixiert wird. Der Rahmen R in Fig. 3 kann modular mit einem gestrichelt angedeuteten weiteren Rahmen R einer anderen Anlagen-Komponente modular verbunden werden, beispielsweise unter Verwendung der Muffensteck-Systemteile 4, 5 oder indirekt über die Standard-Segmenttypen B, C und/oder D.

In Fig. 4 ist eine weitere Anlagen-Komponente K3 dargestellt, die mit Fußteilen 23 auf den Widerlagern 11 zweier Standard-Segmenttypen B von Fig. 1 des Bausatzes S vormontiert ist. Hierbei werden, zweckmäßig, Bolzen 24 verwendet, die durch die in Fig. 1 gezeigten hohlen Kanäle 13 eingeführt und mittels des Vormontieransatzes 14 und des jeweiligen Widerlagers 11, 12 am Rahmen R abgestützt sind.

## Patentansprüche

1. Bausatz (S) zum Erstellen von zwei- oder dreidimensionalen Rahmen (R) zur Anlagen-Vormontage, bei der Anlagenkomponenten (K1, K2, K3) einzeln oder in Gruppen jeweils an mindestens einem Rahmen (R) vormontiert werden, **dadurch gekennzeichnet, dass** der jeweilige Rahmen (R) mit der Vormontage-Anforderung der Anlage oder der Anlagekomponenten (K1, K2, K3) mitwachsend aus Rahmensegmenten aus metallischen und vorgefertigten Standard-Segmenten (A, B, C) von Hohl- oder Vollprofilabschnitten (1, 10, 15, 15') erstellbar ist, die jeweils die Rahmensegmente bilden und über an den vorgefertigten Standard-Segmenten vorgeformte, verschraub-, verlöt- oder verschweißbare Steckmuffen-Systemteile (4, 5) tragfähig zumindest direkt miteinander verbindbar sind, dass ein Standard-Segmenttyp (A) ein gerader Rund- oder Mehrkant-Profilabschnitt (1) mit einem vorspringenden Steckmuffen-Systemteil (4) an einem Ende und einem vertieften Steckmuffen-Systemteil (5) im anderen Ende ist, ein weiterer Standard-Segmenttyp (B) ein gerader Rund- oder Mehrkant-Profilabschnitt (10) mit einem vorspringenden Steckmuffen-Systemteil (4) an einem Ende und einem vertieften Steckmuffen-Systemteil (5) im anderen Ende ist, und wenigstens einen seitlich abstehenden Vormontieransatz (14) und ein im Wesentlichen senkrecht zur Achse des geraden Rund- oder Mehrkant-Profilabschnitts (10) auf den Vormontieransatz (14) ausgerichtetes Vormontierwiderlager (11, 12) aufweist, zwischen dem ein hohler Kanal (13) im Profilabschnitt (10) vorgesehen ist, und ein noch weiterer Standard-Segmenttyp (C) ein 90° Rund- oder Mehrkant-Profilabschnitt (15, 15') mit abgewinkeltem oder rundem Verlauf mit einem vorspringenden Steckmuffen-Systemteil (4) an einem Ende und einem vertieften Steckmuffen-Systemteil (15) im anderen Ende ist, und dass die Standard-Segmenttypen (A, B, C) mit bei den Steckmuffen-Systemteilen (4, 5) platzierten Verschraubbohrungen (9) und/oder Schweißnaht-Fasen (8) vorgefertigt sind.

2. Bausatz nach Anspruch 1, **dadurch gekennzeichnet, dass** wenigstens ein noch weiterer Standard-Segmenttyp (D) zur Kopplung der anderen Standard-Segmenttypen (A, B, C) ein Standard-Verbindungssegment aus einem geraden Rund- oder Mehrkant-Profilabschnitt (25, 25') mit mindestens einem Paar, vorzugsweise mehreren Paaren, vorspringender und vertiefter Steckmuffen-Systemteile (4, 5) ist, deren Achsen, vorzugsweise, unterschiedlichen Raumorientierungen folgen.

3. Bausatz nach Anspruch 1, **dadurch gekennzeichnet, dass** die Standard-Segmenttypen (A, B, C, D) aus Hohl-, Voll-, Rund- oder Mehrkantprofilen (2, 3) gleicher oder unterschiedlicher Durchmesser (d) oder Weiten (w) vorgefertigt sind.

4. Bausatz nach Anspruch 2, **dadurch gekennzeichnet, dass** wenigstens ein Standard-Verbindungssegment (D) zur indirekten Verbindung anderer Standard-Segmenttypen (A, B, C) mit unterschiedlichen Durchmessern (d) oder Weiten (w) adapterartig, vorzugsweise mit Steckmuffen-Systemteilen (4, 5) unterschiedlicher Durchmesser oder Weiten, vorgefertigt ist.

5. Bausatz nach wenigstens einem der vorhergehenden Ansprüche, **dadurch gekennzeichnet, dass** die Standard-Segmenttypen (A, B, C, D) zumindest außenseitig oberflächenbehandelt und/oder Mehrkantprofile (3') in ablaufgünstigen, um die Profilachse gedrehten Positionen verbaubar sind.

6. Bausatz nach wenigstens einem der vorhergehenden Ansprüche, **dadurch gekennzeichnet, dass** wenigstens ein zur Anlagen-Vormontage aus den Standard-Segmenttypen (A, B, C, D) erstellter Rahmen (R) modular mit einem weiteren, zu einer Anlagen-Vormontage aus den Standard-Segmenttypen (A, B, C, D) erstellten Rahmen (R), vorzugsweise über Steckmuffen-Systemteile (4, 5) der Standardsegmente des Segmenttyps (B) oder (D), verbindbar ist.

## Claims

1. Frame kit (S) for erecting two-dimensional or three-dimensional frames for the pre-assembly of a container treatment plant, during which pre-assembly plant components (K1, K2, K3) one by one or in groups are pre-assembled respectively at at least one frame (R), **characterized in that** the respective frame (R) while growing with the pre-assembly-requirement of the plant or of the plant components (K1, K2, K3) is erected from frame segments of metallic and prefabricated standard-segments (A, B, C) of hollow profile sections or solid profile sections (1, 10, 15, 15') which respectively form the frame segments and are at least directly connectable with an other via plug-in socket system parts (4, 5) which are prefabricated at the prefabricated standard-segments by screwing, soldering or welding, that one standard-segment type (A) is a straight profile section (1) having a round or polygonal cross section and a protruding plug-in system part (4) at one end and a recessed plug-in socket system part (5) in the other end, that a further standard-segment type (B) is a straight profile section (10) of round or polygonal cross section and a protruding plug-in socket system part (4) at one end and a recessed plug-in socket system part in the other end and has at least one pre-assembly projection (4) protruding sidewardly and a pre-assembly counterbearing (11, 12) aligned with the pre-assembly projection (14) substantially perpendicular to the axis of the straight profile section (10) having round or polygonal cross section, and a hollow channel (13) in the profile section (10) extending between the pre-assembly projection (14) and the pre-assembly counterbearing (11, 12), and that a further standard-segment type (C) is a profile section (15, 15') of round or polygonal cross section and an angled or rounded course with a protruding plug-in socket system part (4) at one end and a recessed plug-in socket system part (15) in the other end, and that the standard-segment types (A, B, C) are prefabricated with screw bores (9) and/or welding seam bevels (8) respectively placed close to the plug-in socket system parts (4, 5).

2. Frame kit according to claim 1, **characterized in that** at least one even further standard-segment type (D) for interconnecting the other standard-segment types (A, B, C) is a standard-connecting segment of a straight profile section (25, 25') of round or polygonal cross section with at least one pair, preferably several pairs, protruding and recessed plug-in socket system parts (4, 5) the axis of which pairs, preferably extend in different spatial orientations.

3. Frame kit according to claim 1, **characterized in that** the standard-segment types (A, B, C, D) are prefabricated from profiles (2, 3) of hollow, solid, round or polygonal cross sections having equal or differing diameters (d) or widths (w).

4. Frame kit according to claim 2, **characterized in that** at least one standard-connecting segment (D) for indirectly interconnecting other standard-segment types (A, B, C) having differing diameters (d) or widths (w) is prefabricated like an adapter preferably with plug-in socket system parts (4, 5) of different diameters or widths.

5. Frame kit according to at least one of the preceding claims, **characterized in that** the standard-segment types (A, B, C, D) at least at their outer sides are surface treated and/or that profiles (3) having polygonal cross sections can be mounted in positions turned about the profile axis in order to assure favourable liquid run-off properties.

6. Frame kit according to at least one of the preceding claims, **characterized in that** at least one frame (R) erected from the standard-segment types (A, B, C, D) for a plant pre-assembly can be connected in modular fashion with a further frame (R) also erected from the standard-segment types (A, B, C, D) for a plant pre-assembly, preferably via plug-in socket system parts (4, 5) of standard-segments of the segment type (B) or (D).

## Revendications

1. Kit de construction (S) destiné la réalisation de cadres (R) en deux ou trois dimensions pour le pré-montage d'installations, lors duquel des composants d'installation (K1, K2, K3) sont pré-montés individuellement ou en groupes respectivement sur au moins un cadre (R),
**caractérisé en ce que** le cadre (R) respectivement considéré peut être réalisé de manière progressive, en suivant l'état d'avancement conformément à l'exigence de pré-montage de l'installation ou des composants d'installation (K1, K2, K3), à partir de segments de cadre constitués de segments standards (A, B, C) métalliques et préfabriqués à partir de tronçons de profilés creux ou pleins (1, 10, 15, 15'), qui forment respectivement les segments de cadre, et peuvent être assemblés mutuellement, au moins de manière directe et stable, par l'intermédiaire de parties de système de manchon enfichable (4, 5) à visser, braser ou souder, préformées sur les segments standards préfabriqués, **en ce qu'**un type de segment standard (A) est un tronçon rectiligne de profilé rond ou polygonal (1) comportant une partie de système de manchon enfichable en saillie (4) à une extrémité et une partie de système de manchon enfichable en creux (5) dans l'autre extrémité, un autre type de segment standard (B) est un tronçon rectiligne de profilé rond ou polygonal (10) comportant une partie de système de manchon enfichable en saillie (4) à une extrémité et une partie de système de manchon enfichable en creux (5) dans l'autre extrémité, et présente au moins un appendice de pré-montage (14) en saillie latérale et une butée d'appui de pré-montage (11, 12) orientée de manière sensiblement perpendiculaire à l'axe du tronçon rectiligne de profilé rond ou polygonal (10) en regard de l'appendice de pré-montage (14), entre lesquels est prévu un canal creux (13) dans le tronçon de profilé (10), et encore un autre type de segment standard (C) est un tronçon à 90° de profilé rond ou polygonal (15, 15') avec un tracé coudé angulairement ou arrondi, qui comporte une partie de système de manchon enfichable en saillie (4) à une extrémité et une partie de système de manchon enfichable en creux (5) dans l'autre extrémité, et **en ce que** les types de segments standards (A, B, C) sont préfabriqués avec des perçages d'assemblage à vis (9) et/ou des chanfreins de joint soudé (8) placés au niveau des parties de système de manchon enfichable (4, 5).

2. Kit de construction selon la revendication 1, **caractérisé en ce qu'**au moins encore un autre type de segment standard (D) destiné au couplage des autres types de segment standard (A, B, C), est un élément d'assemblage standard en un tronçon rectiligne de profilé rond ou polygonal (25, 25') comportant au moins une paire, de préférence plusieurs paires de parties de système de manchon enfichable en saillie et en creux (4, 5), dont les axes suivent, de préférence, des orientations spatiales différentes.

3. Kit de construction selon la revendication 1, **caractérisé en ce que** les types de segment standard (A, B, C, D) sont préfabriqués à partir de profilés (2, 3) creux, pleins, ronds ou polygonaux, de diamètres (d) ou de largeurs de section (W) identiques ou différents.

4. Kit de construction selon la revendication 2, **caractérisé en ce qu'**au moins un élément d'assemblage standard (D), en vue de l'assemblage indirect d'autres types de segment standard (A, B, C) de diamètres (d) ou de largeurs de section (W) différents, est préfabriqué à la manière d'un adaptateur, de préférence avec des parties de système de manchon enfichable (4, 5) de diamètres ou de largeurs de section différents.

5. Kit de construction selon l'une des revendications précédentes, **caractérisé en ce que** les types de segment standard (A, B, C, D) présentent un traitement de surface au moins sur le côté extérieur, et/ou des profilés polygonaux (3') peuvent être implantés dans des positions favorables au déroulement du montage, tournées autour de l'axe de profilé.

6. Kit de construction selon l'une des revendications précédentes, **caractérisé en ce qu'**au moins un cadre (R) réalisé à partir des types de segment standard (A, B, C, D) pour le pré-montage d'une installation, peut être assemblé de manière modulaire, à un autre cadre (R) réalisé à partir des types de segment standard (A, B, C, D) pour le pré-montage d'une installation, de préférence par l'intermédiaire de parties de système de manchon enfichable (4, 5) des segments standards du type de segment (B) ou (D).
